# EUROPEAN PATENT SPECIFICATION

(11) **EP 4 220 271 B1**
(45) Date of publication and mention of the grant of the patent: **29.10.2025**
(21) Application number: 22153964.6
(22) Date of filing: 28.01.2022
(51) Int. Cl.: G02B 21/26, G02B 21/24, G02B 21/00

(54) **SAMPLE CARRIER INTERFACE AND METHOD**
PROBENTRÄGERSCHNITTSTELLE UND VERFAHREN
INTERFACE ET PROCÉDÉ DE SUPPORT D'ÉCHANTILLON

(43) Date of publication of application: 02.08.2023
(73) Proprietor: Leica Microsystems CMS GmbH, 35578 Wetzlar (DE)
(72) Inventor: Christ, Stefan, 35641 Schöffengrund (DE)
(74) Representative: Schaumburg und Partner Patentanwälte mbB

(56) References cited:
- EP-A1- 1 548 484
- EP-A2- 1 898 246

## Description

### Technical field

The invention relates to a sample carrier interface for mounting a sample carrier on a microscope stage. The invention further relates to a method for adapting a sample carrier to a microscope stage.

### Background

In an inverse microscope setup, the detection objective is arranged below a microscope stage. To allow for a microscopical observation of a sample arranged on the microscope stage, the microscope stage of the inverse microscope comprises an opening. Typically, the sample is received in a sample carrier, for example a microwell plate, a petri dish or a microscope slide. The sample or samples are observed from below through a window portion arranged at a bottom side of the sample carrier.

In order to mount the sample carrier to the microscope stage of an inverse microscope and prevent the sample carrier from falling through the opening, some inverse microscopes comprise so called stage inserts. On the one hand, these stage inserts fit into the opening of the microscope stage and, on the other hand, have an inside edge that adapts to the outer shape of the specimen holder. The inside edge comprises a shelf-like structure on which the microwell plate rests. However, this shelf-like structure collides with the objective when observing samples located close to the inside edge of the stage insert. In particular when the sample carrier is microwell plate, this prevents the use of wells close to the inside edge of the stage insert, thereby greatly reducing the capacity of the sample carrier.

The use of microwell plates is well known in the fields of medical and biological analytics. Most commonly microwell plates are used for high-throughput screening.

The use of microwell plates in microscopy, however, is relatively new. Since microwell plates can carry multiple samples in separate wells and have a high sample carrying capacity, they are often used in the context of high-content microscopy.

EP 1 548 484 A1 discloses an incubator which can be placed on a microscope stage. The incubator comprises a water tank to which a dish can be detachably mounted. The mounting mechanism comprises a pair of holders fixed by screws to a wall of the water tank. Further reference is made to EP 1 898 246 A2 which discloses an upper stage of an inverted microscope comprising an elastic body for pressing a shaft with a specimen retention part against a well plate.

### Summary

It is therefore an object to provide a sample carrier interface for mounting a sample carrier on a microscope stage and a method for mounting a sample carrier on a microscope stage that allow the sample carriers capacity to be fully utilized.

The aforementioned object is achieved by the subject-matter of the independent claims. Advantageous embodiments are defined in the dependent claims and the following description.

The proposed sample carrier interface for mounting a sample carrier on a microscope stage comprises a frame configured to receive the sample carrier and to be positioned atop an opening of the microscope stage. The sample carrier interface further comprises a locking device configured to exert a lateral force to the sample carrier when the locking device is in a locked state in order to keep the sample carrier suspended above the opening when the sample carrier is received in the frame and the frame is positioned atop the opening of the microscope stage.

When the sample carrier is received in the frame, the frame effectively increases the dimensions of the sample carrier such that the sample carrier does not fall through the opening of the microscope stage. Thereby, the sample carrier interface adapts the sample carrier for use with for use with the microscope. The sample carrier is held above or inside the opening by the sample carrier interface. Samples received in the sample carrier can be observed from below through the opening of the microscope stage.

The sample carrier received in the frame is held in place only by the lateral forces exerted on it by the locking device. Thus, the sample carrier interface does not need any supporting elements below the sample carrier. This allows unrestricted access to a bottom side of the sample carrier, and thus an unobstructed observation of the sample received in the sample carrier from below. In particular, parts of the sample carrier close to an inside edge of the opening in the microscope stage are unobstructed. The proposed sample carrier interface thus allows the sample carriers capacity to be fully utilized.

In a preferred embodiment the locking device is configured to hold the sample in place when the sample carrier interface is moved to and from the microscope stage, and when the locking device is in the locked state. Thereby, the sample carrier interface can be loaded with the sample carrier outside the confines of the microscope. This greatly facilitates the use of the sample carrier interface. In particular, to speed up microscopic observation, several sample carrier interfaces can be loaded with sample carriers in advance.

In another preferred embodiment the frame comprises an opening at a bottom side and is configured to receive the sample carrier through said opening. In this embodiment in particular, the bottom side of the sample carrier is completely accessible allowing for an unobstructed observation of the samples received in the sample carrier from below.

In another preferred embodiment the bottom side of the frame defines a contact surface that contacts a top surface of the microscope stage when the frame is positioned atop the opening of the microscope stage. In this embodiment, the sample carrier interface is placed atop the microscope stage. This means that the sample carrier interface does not have to be adapted to a specific opening of a specific microscope stage and can be used with several different microscopes and microscope stages. This greatly increases the versatility of the sample carrier interface.

In another preferred embodiment the contact surface of the frame is at the same height as a bottom side of the sample carrier when the sample carrier is received in the frame and the frame is positioned atop the opening of the microscope stage. In this embodiment, when the sample carrier interface is placed atop the microscope stage, the sample carrier is positioned above the opening in the microscope stage and the bottom side of the sample carrier is at the same high as the top surface of the microscope stage. Thereby, the bottom side of the sample carrier is always positioned at an easy to reference height. Thus, no manual adjustment is necessary when the sample carrier interface is positioned on the microscope stage. This, for example, allows for an easier automation of the microscopic observation.

In another preferred embodiment the sample carrier is completely received inside the frame. In this embodiment, the frame wraps around the sample carrier leaving at least the bottom side of the sample carrier exposed. Thereby, the frame protects the sample carrier for example from getting scratched.

The locking device comprises an adjusting element for switching between the locked state, and an unlocked state in which the locking device does not exert the lateral force to the sample carrier. The adjusting element may in particular be a slider, a button or a rotary switch. The adjusting element allows a user to quickly switch between the locked state and the unlocked state facilitating an easier use of the sample carrier interface.

In another preferred embodiment the locking device comprises at least one moveable engaging portion configured to engage with the sample carrier and thereby exert the lateral force to the sample carrier when the locking device is in the locked state. In this embodiment, the engaging portion is brought into contact with the sample carrier in order to exert the lateral force to the sample carrier. The bigger the contact surface between the engaging portion and the sample carrier, the more securely the sample carrier is held by the sample carrier interface. Therefore, it is advantageous to provide multiple engaging portion that engage with the sample carrier from different sides when the locking device is in the locked state.

In another preferred embodiment the locking device comprises a wire that wraps around the sample carrier when the sample carrier is received in the frame; and wherein the wire can be tightened in order to exert the lateral force to the sample carrier. In particular, the can be tightened around one or more engaging portions and the sample carrier in order to bring the engaging portions in contact with the sample carrier and to exert the lateral force to the sample carrier. By using a wire, the lateral force exerted to the sample carrier is uniform, which ensures a secure grip on the sample carrier.

In another preferred embodiment the sample carrier interface comprises at least one fixing element configured to engage with a corresponding fixing element of the microscope stage. In particular, the fixing element of the sample carrier interface and the corresponding fixing element of the microscope stage are magnets. Alternatively, or additionally, the corresponding fixing element of the microscope stage comprises at least one protruding element, for example a pin, configured to fit into a corresponding hole of the frame, the hole forming the fixing element of the sample carrier interface. The fixing element prevents that the position of the sample carrier interface changes once the sample carrier interface is positioned on the microscope stage.

In another preferred embodiment the sample carrier interface comprises at least one guiding portion configured to engage with the microscope stage for positioning the sample carrier interface atop the microscope stage. The guiding portion ensures that the sample carrier interface is reliably positioned at the same predetermined position on the microscope stage every time the sample carrier interface is positioned on the microscope stage. This means that no additional adjustment is necessary, which, for example, allows for an easier automation of the microscopic observation.

In another preferred embodiment the frame is configured to form an incubation chamber when the sample carrier is received in the frame. In particular, the frame is configured to form a gas tight incubation chamber when the sample carrier is received in the frame. In this embodiment, the sample carrier interface is used as a so called stage top incubator. The sample carrier interface can be used to provide a sample received in the sample carrier with an incubation atmosphere and/or a (semi-) sterile atmosphere. Since the incubation chamber is formed by the sample carrier interface itself, the microscope itself does not need to be specifically adapted.

In another preferred embodiment the locking device comprises a sealing portion configured to provide a gas tight seal to the incubation chamber when the sample carrier is received in the frame and the locking device is in a locked state. In this embodiment, the sample carrier forms part of the walls of the incubation chamber. This makes the sample carrier interface much lighter, and thus easier to handle. Further, this saves material cost.

In another preferred embodiment the frame comprises a gas inlet for providing an incubation atmosphere and/or a (semi-) sterile atmosphere to the incubation chamber. In this embodiment, the gas inlet is for example connected to a climate control unit for controlling temperature, humidity, and CO2-content of the provided atmosphere. This allows for to a precise control over the environment of the samples received in the sample carrier.

In another preferred embodiment the sample carrier is a microwell plate or a slide holder. In particular, the frame is adapted to receive a specific type or form factor of sample carrier, for example a microwell plate or a slide holder. By adapting the frame to a specific form factor, the sample carrier is received much more secure inside the frame.

The invention further relates to a method for mounting a sample carrier on a microscope stage. The method comprises the following steps: Providing a sample carrier interface as described above. Inserting the sample carrier into a frame of the sample carrier interface. Locking the sample carrier to the frame by exerting a lateral force to the sample carrier. Placing the sample carrier interface atop an opening of the microscope stage in order to suspend the sample carrier above the opening.

The method has the same advantages as the sample carrier interface described above. In particular, the method can be supplemented using the features of the dependent claims directed at the sample carrier interface.

In a preferred embodiment the method comprises the following additional steps: Placing the sample carrier on a flat surface or a dedicated mounting plate. Lowering the sample carrier interface onto the sample carrier from above. By lowering the sample carrier interface onto the sample carrier from above, the contact surface of the frame is necessarily positioned at the same height as the bottom side of the sample carrier. Thereby, the bottom side of the sample carrier is always positioned at an easy to reference height, and no manual adjustment is necessary when the sample carrier interface is positioned on the microscope stage.

### Short Description of the Figures

Hereinafter, specific embodiments are described referring to the drawings, wherein:
- Figure 1: is a schematic sectional view of a sample carrier interface for mounting a sample carrier on a microscope stage according to an embodiment not covered by the subject-matter of the claims;
- Figure 2: is a schematic top view of the sample carrier interface according to another embodiment;
- Figure 3: is a schematic sectional view of the sample carrier interface according to Figure 2;
- Figure 4: is a schematic top view of the sample carrier interface according to Figures 2 and 3;
- Figure 5: is a schematic sectional view of the sample carrier interface according to Figures 2 to 4;
- Figure 6a: is a schematic view of a locking device of the sample carrier interface according to Figures 2 to 5 in its unlocked state;
- Figure 6b: is a schematic view of the locking device of the sample carrier interface according to Figures 2 to 5 in its locked state;
- Figure 7a: is a schematic sectional view of a sample carrier;
- Figure 7b: is a schematic sectional view of a sample carrier interface not covered by the subject-matter of the claims and the sample carrier according to Figure 7a.
- Figure 7c: is another schematic sectional view of the sample carrier interface according to Figure 7b and the sample carrier according to Figure 7a;
- Figure 7d: is another schematic sectional view of the sample carrier interface according to Figure 7b and the sample carrier according to Figure 7a;
- Figure 8: is a schematic sectional view of a sample carrier interface according to
- Figure 9: an embodiment having an incubation chamber; is a schematic top view of the sample carrier interface according to Figure 8;
- Figure 10: is a schematic top view of the sample carrier interface according to an embodiment not covered by the subject-matter of the claims;
- Figure 11a: is a schematic top view of a sample carrier comprising 96 wells; and
- Figure 11b: is a schematic top view of a sample carrier comprising 24 wells.

### Detailed Description

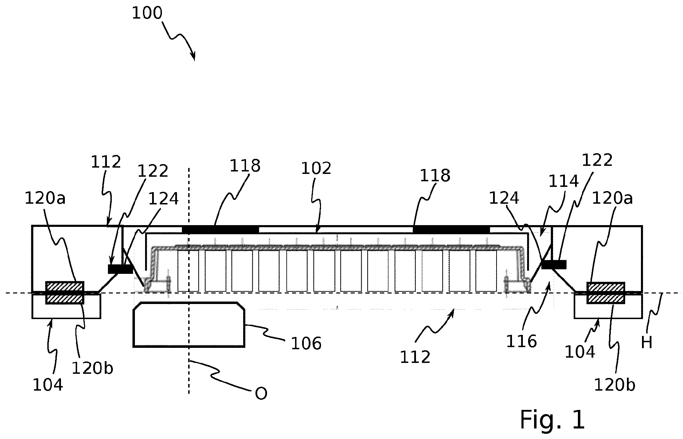

Figure 1 is a schematic sectional view of a sample carrier interface 100 for mounting a sample carrier 102 on a microscope stage 104 according to an embodiment not covered by the subject-matter of the claims.

Figure 1 also shows an objective 106 of a microscope. The optical axis O of the objective 106 is shown as a dashed vertical line. In Figure 1 the sample carrier 102 is exemplary shown to be a microwell plate having multiple wells 108 for receiving a sample each.

The sample carrier interface 100 is configured to prevent the sample carrier 102 from falling through an opening 110 of the microscope stage 104. The opening 110 of the microscope stage 104 allows the samples received in the sample carrier 102 to be observed from below via the objective 106. However, the opening 110 of the microscope stage 104 is typically larger than the dimension of the sample carrier 102. Thus, the sample carrier interface 100 is needed to adapt the sample carrier 102 to the microscope stage 104.

The sample carrier interface 100 comprises a frame 112 which holds the sample carrier 102. The dimensions of the frame 112 are such that the frame 112 can be placed above the opening 110 of the microscope stage 104 without falling through. A bottom side of the frame 112 forms a contact surface which is in contact with a top surface of the microscope stage 104 when the sample carrier interface 100 is placed on the microscope stage 104.

In the present embodiment, the sample carrier 102 is completely received in a cavity 114 formed by the frame 112. The sample carrier 102 can be inserted into the cavity 114 through an opening 116 located at the bottom side of the frame 112. In the present embodiment, the frame 112 extends circumferentially around the sample carrier 102 and is closed at the top. In other words, the frame 112 forms an upside-down box which can be put over the sample carrier 102 in order to insert the sample carrier 102 into the frame 112. The cavity 114 of the frame 112 is wider at the bottom side of the frame 112 and tapers upwards. This tapered geometry of the cavity 114 guides the sample carrier 102 into position when the sample carrier interface 100 is lowered onto the sample carrier 102 in order to insert the sample carrier 102 into the frame 112. Further, this tapered geometry prevents the objective 106 from colliding with the frame 112 when the objective 106 is directed at wells 108 close to an inside edge of the opening 110 of the microscope stage 104, and thereby allows greater access to the sample carrier 102 from below.

The frame 112 according to the present embodiment also comprises spacer elements 118 arranged at a top side of the frame 112 that prevent the sample carrier 102 from being inserted to far into the cavity 114. In particular, the sample carrier 102 is inserted into the frame 112 such that a bottom side of the sample carrier 102, the bottom side of the frame 112 and a top surface of the microscope stage 104 are all at a same height that is denoted in Figure 1 by a dashed horizontal line H.

The frame 112 further comprises fixing elements 120a that are configured to engage with complimentary fixing elements 120b of the microscope stage 104. The fixing elements 120a of the frame 112 are arranged flush with the bottom side of the frame 112 to the left and right of the sample carrier 102 in Figure 1. The fixing elements 120b of the microscope stage 104 are arranged flush with the top surface of the microscope stage 104 to the left and right of the opening 110 of the microscope stage 104 in Figure 1. In the present embodiment, the fixing elements 120a of the frame 112 and the complimentary fixing elements 120a of the microscope stage 104 are formed by magnets.

The sample carrier interface 100 further comprises a locking device 122 configured to lock the sample carrier 102 received in the frame 112. The locking device 122 has a locked state in which the sample carrier 102 is locked in position, and an unlocked state in which the sample carrier 102 not locked in position and can for example be removed from the frame 112. Figure 1 exemplary shows the locking device 122 in its locked state.

The locking device 122 comprises moveable engaging portions 124 that are arranged inside the cavity 114 of the frame 112. The engaging portions 124 are positioned such that each engaging portion 124 faces a side surface of the sample carrier 102. The engaging portions 124 can be moved towards the sample carrier 102 in order to engage with the sample carrier 102. When the engaging portions 124 engage with the sample carrier 102, the engaging portions 124 exert a lateral force to the sample carrier 102 which locks the sample carrier 102 in position, and the locking device 122 is in its locked state. Since the sample carrier 102 is held in place only by the engaging portions 124 engaging the sample carrier 102 from the side, the bottom side of the sample carrier 102 is completely unobstructed. Thereby, the objective 106 can easily be positioned under every well 108 of the sample carrier 102 allowing to capacity of the sample carrier 102 to be fully utilized.

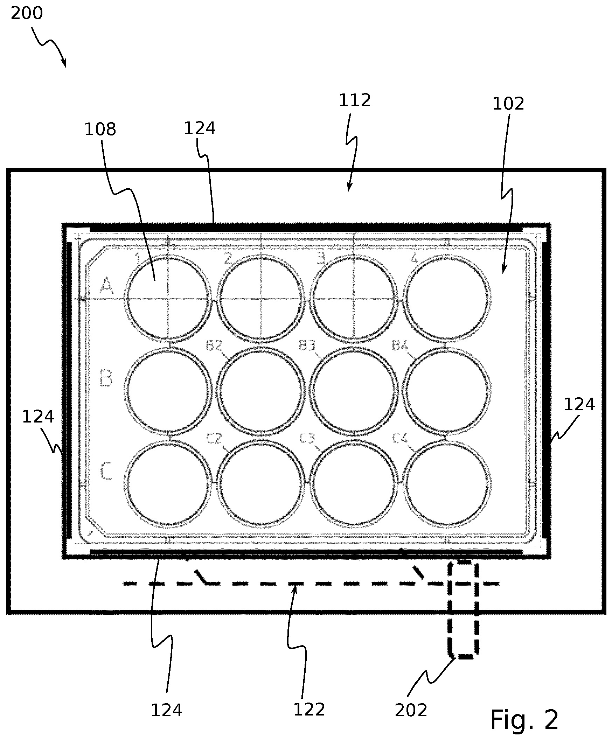

Figure 2 is a schematic top view of the sample carrier interface 200 according to another embodiment.

The sample carrier interface 200 according to Figure 2 is distinguished form the sample carrier interface 200 according to Figure 1 in that the frame 112 is open at the top allowing access to the sample carrier 102 from above. As can be seen in Figure 2, the frame 112 surrounds the sample carrier 102 on all four sides. In particular, the sample carrier 102 is arranged in the center of the frame 112 when viewed from above. Thus, the sample carrier 102 is located above the center of the opening 110 of the microscope stage 104 when the sample carrier interface 200 is placed on the microscope stage 104. This ensures that all wells 108 of the sample carrier 102 are equally accessible for observation using the objective 106.

The locking device 122 comprises an adjusting element for switching between the locked state of the locking device 122 and the unlocked state of the locking device 122. In the present embodiment, the adjusting element is exemplary formed by a slider 202 that can be moved along a side of the frame 112, that is from left to right and back in Figure 2. The slider 202 has a first position corresponding to the unlocked state of the locking device 122, and a second position corresponding the locked state of the locking device 122. When the slider 202 is moved from the first position to the second position, the engaging portions 124 are moved towards the sample carrier 102 and eventually brought into contact with the side surface of the sample carrier 102. When the slider 202 is moved from the second position back to the first position, the engaging portions 124 are moved away from the sample carrier 102.

In Figure 2 the locking device 122 is shown in its unlocked state and the slider 202 is in its first position. Thus, as can be seen in Figure 2, the engaging portions 124 are not in contact with the sample carrier 102. In this state, the sample carrier 102 can be inserted into or removed from the sample carrier interface 200.

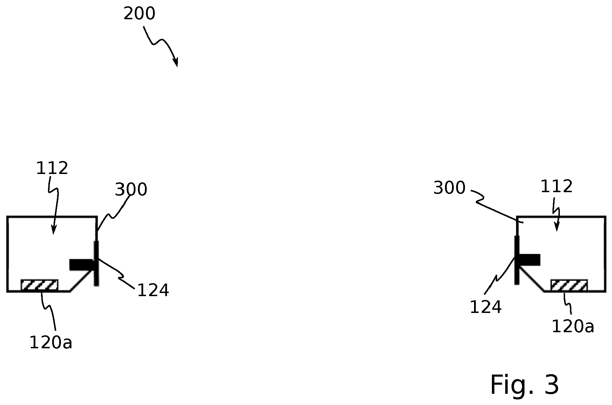

Figure 3 is a schematic sectional view of the sample carrier interface 200 according to Figure 2.

In Figure 3 the locking device 122 is shown in its unlocked state. As can be seen in Figure 3, the engaging portions 124 are located directly at inside walls 300 of the frame 112 when the locking device 122 is in its unlocked state. The sample carrier 102 can thus be inserted unhindered into the frame 112. For the sake of clarity, the sample carrier 102 is not shown in Figure 3.

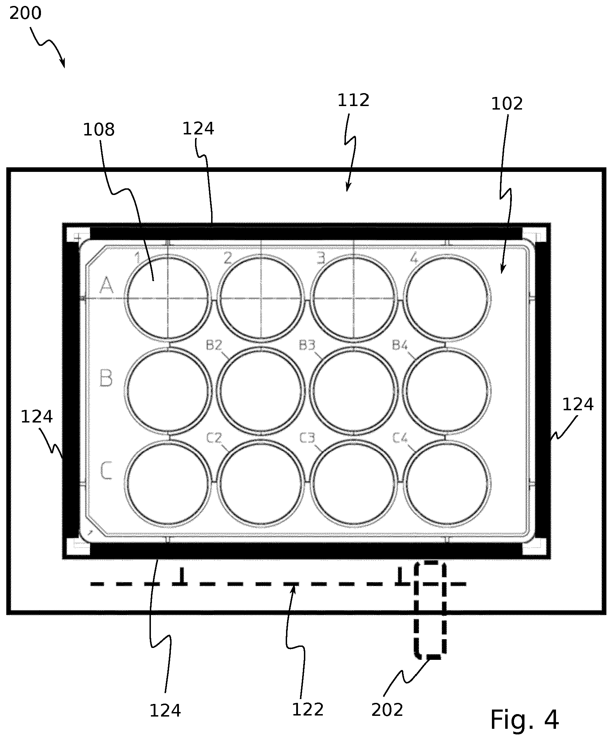

Figure 4 is a schematic top view of the sample carrier interface 200 according to Figures 2 and 3.

In Figure 4 the locking device 122 is shown in its locked state and the slider 202 is in its second position. The engaging portions 124 are in contact with the sample carrier 102 and exert the lateral force to the side surfaces of the sample carrier 102. In this state, the sample carrier 102 is securely held by the sample carrier interface 200 and the sample carrier interface 200 can be used to carry the sample carrier 102.

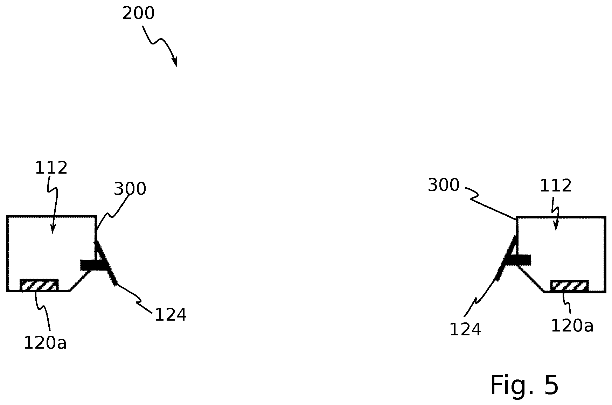

Figure 5 is a schematic sectional view of the sample carrier interface 200 according to Figures 2 to 4.

In Figure 5 the locking device 122 is shown in its locked state. An upper part of each of the engaging portions 124 is hinged at the inside walls 300 of the frame 112. A lower part of each of the engaging portions 124 is moved towards the inside of the frame 112, such that the engaging portions 124 are slightly tilted. For the sake of clarity, the sample carrier 102 is not shown in Figure 5.

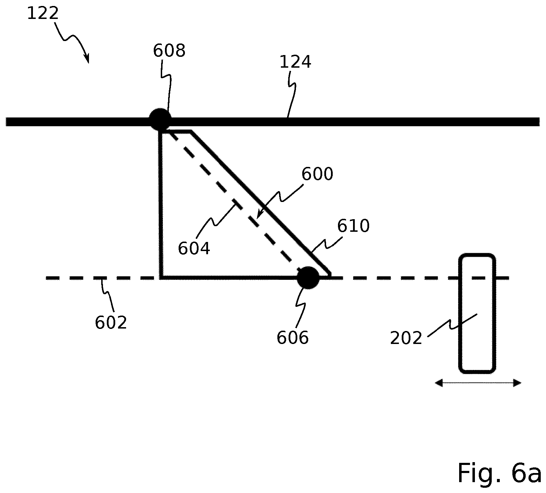

Figure 6a is a schematic view of the locking device 122 of the sample carrier interface 200 according to Figures 2 to 5 in its unlocked state.

The slider 202 is connected to the engaging portion 124 via an arrangement 600 of rods and joints. A first rod 602 is movable in the horizontal direction in Figure 6a, and is connected to a second rod 604 by a first joint 606. The second rod 604 is connected to the engaging portion 124 by a second joint 608. The movement of the second rod 604 is limited by a guiding element 610. In a first position the second rod 604 is arranged such that the first rod 602 and the second rod 604 enclose an angle smaller than 90°. When the locking device 122 is in its unlocked state, the second rod 604 is in the first position.

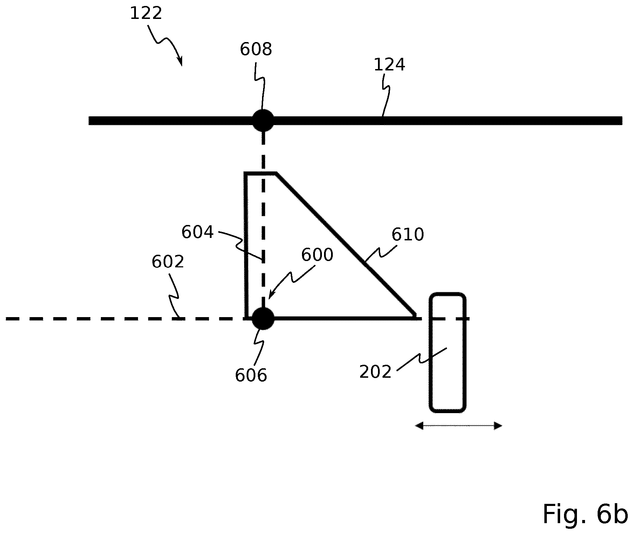

Figure 6b is a schematic view of the locking device 122 of the sample carrier interface 200 according to Figures 2 to 5 in its locked state.

In a second position the second rod 604 is arranged such that the first rod 602 and the second rod 604 are perpendicular to each other. As can be seen by comparing Figures 6a and 6b, this means that when the second rod 604 is in its second position, the engaging portion 124 is located further away from the first rod 602 than when the second rod 604 is in its first position.

By moving the first rod 602 horizontally to the left in Figures 6a and 6b, the second rod 604 is moved from its first position to its second position. Likewise, by moving the first rod 602 horizontally to the right in Figures 6a and 6b, the second rod 604 is moved from its second position back to its first position. Thus, the arrangement 600 of rods and joints forms a lever that pushes he engaging portion 124 to the top in Figures 6a and 6b, and thus towards the sample carrier 102 received in the frame 112.

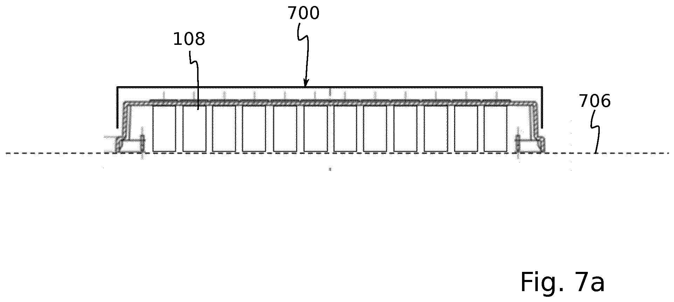

Figures 7a to 7d are schematic sectional views of a sample carrier 700 and a sample carrier interface 702 according to an embodiment not covered by the subject-matter of the claims. When viewed together, Figures 7a to 7d illustrate a method for adapting the sample carrier 700 to a microscope stage 704.

Figure 7a is a schematic sectional view of the sample carrier 700.

The sample carrier 700 is exemplary formed as microwell plate comprising multiple wells 108 for receiving the samples. The sample carrier 700 is arranged atop a flat surface 706, such as a table surface or a dedicated mounting plate. Figure 7a corresponds to a first step in the method for adapting the sample carrier 700 to a microscope stage 704.

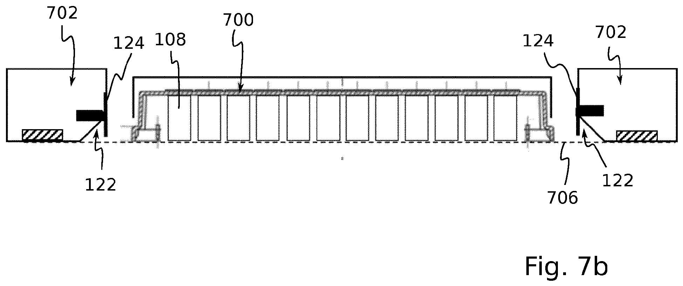

Figure 7b is a schematic sectional view of the sample carrier interface 702 and the sample carrier 700.

In Figure 7b, the sample carrier 700 is received inside the sample carrier interface 702 and a locking device 122 of the sample carrier interface 702 is in its unlocked state. Figure 7b corresponds to a second step in the method for adapting the sample carrier 700 to the microscope stage 704. In the second step, the sample carrier 700 is inserted into the frame 112 of the sample carrier interface 702 by lowering the sample carrier interface 702 onto the sample carrier 700 from above.

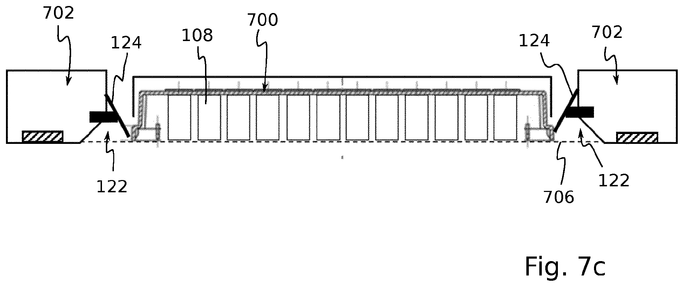

Figure 7c is another schematic sectional view of the sample carrier interface 702 and the sample carrier 700.

In Figure 7c, the sample carrier 700 is received inside the sample carrier interface 702 and the locking device 122 of the sample carrier interface 702 is in its locked state. Figure 7c corresponds to a third step in the method for adapting the sample carrier 700 to the microscope stage 704. In the third step the sample carrier 700 is locked to the frame 112 by exerting a lateral force to the sample carrier 700. The lateral forces is exerted by the engaging portions 124 of the locking device 122 that are brought into contact with the side surface of the sample carrier 700.

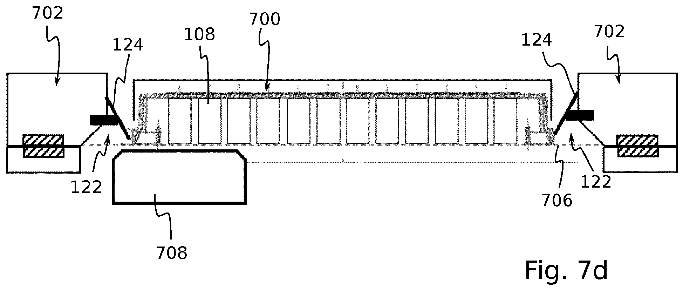

Figure 7d is another schematic sectional view of the sample carrier interface 702 and the sample carrier 700.

In Figure 7d, the sample carrier 700 is received inside the sample carrier interface 702 and the locking device 122 of the sample carrier interface 702 is in its locked state. The combination of sample carrier interface 702 and sample carrier 700 is positioned atop a microscope stage 704 such that the sample carrier 700 is suspended over an opening 110 of the microscope stage 704. In the suspended state, the samples received in the wells 108 of the sample carrier 700 can be observed via an objective 708 of the microscope. Figure 7c corresponds to a fourth step in the method for adapting the sample carrier 700 to the microscope stage 704. In the fourth step the sample carrier interface 702 is placed atop the opening 110 of the microscope stage 704 in order to suspend the sample carrier 700 above the opening 110.

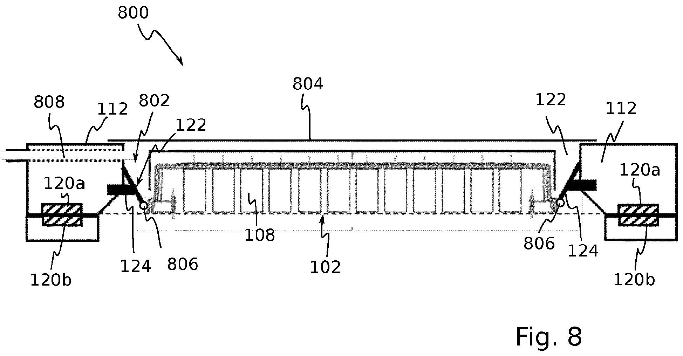

Figure 8 is a schematic sectional view of a sample carrier interface 800 according to an embodiment having an incubation chamber 802.

The sample carrier interface 800 according to Figure 8 is distinguished from the sample carrier interface 100 according to Figure 1 in having the incubation chamber 802 and having means for providing an incubation atmosphere to the incubation chamber 802.

The incubation chamber 802 is formed above the sample carrier 102. The incubation chamber 802 is limited by the frame 112 of the sample carrier interface 800 and the sample carrier 102 itself. The frame 112 is closed by a lid 804 that is placed on top of the frame 112 and that provides a gas tight seal. The engaging portions 124 each comprise a sealing portion 806 that is configured to provide a gas tight seal to the incubation chamber 802 when the sample carrier 102 is received in the frame 112 and the locking device 122 is in a locked state. This means, that in this embodiment the incubation chamber 802 is only formed when the sample carrier 102 is received in the frame 112, and when the locking device 122 is in its locked state.

A gas inlet 808 is arranged to the right of incubation chamber 802 in Figure 8. The gas inlet 808 can for example be connected to a climate control unit in order to provide an incubation atmosphere to the incubation chamber 802.

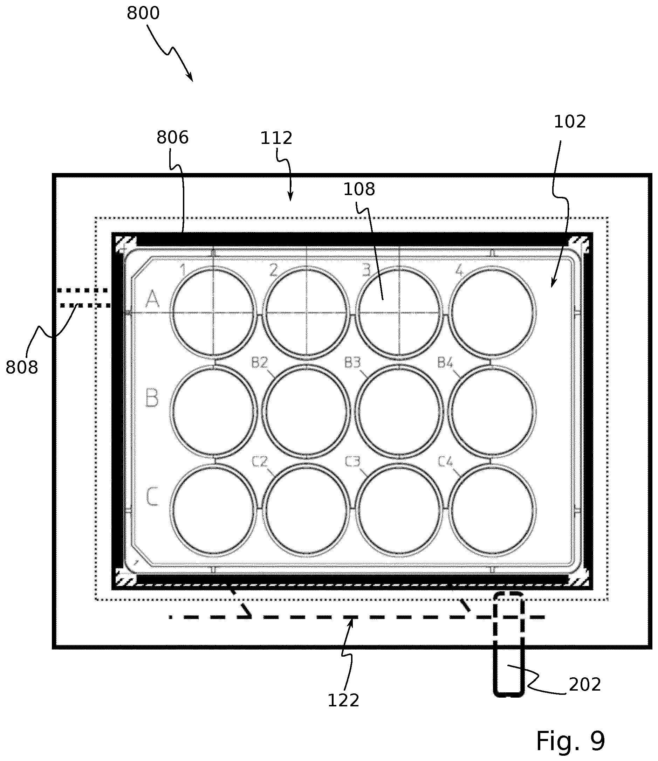

Figure 9 is a schematic top view of the sample carrier interface 800 according to Figure 8.

As can be seen in Figure 9, the sealing portion 806 that ensures a gas-tight seal extends circumferentially around the sample carrier 102. This provides a secure and gas tight seal to the incubation chamber 802. The position of the gas inlet 808 is shown in Figure 9 as dotted lines.

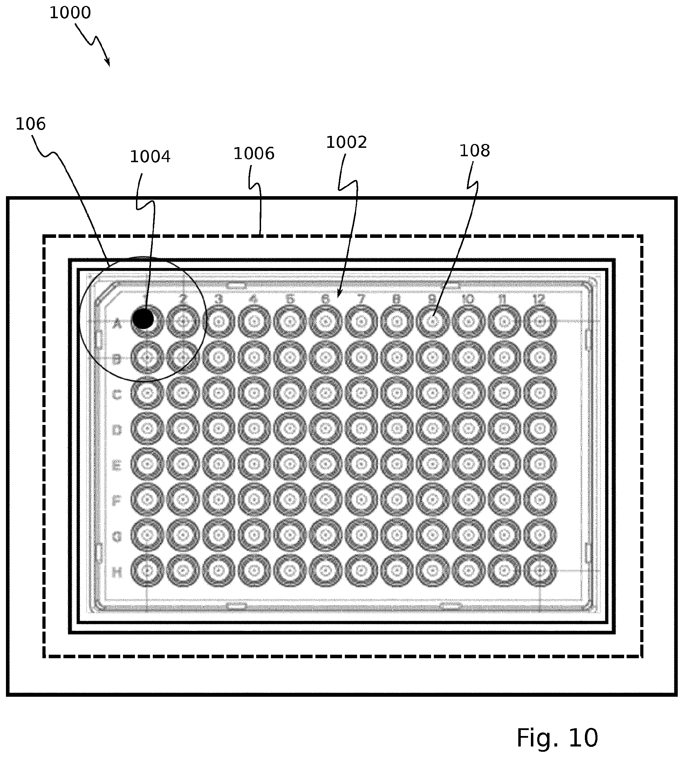

Figure 10 is a schematic top view of the sample carrier interface 1000 according to an embodiment not covered by the subject-matter of the claims.

The sample carrier 1002 received in the sample carrier interface 1000 is exemplary formed as a microwell plate having 96 wells 108. Figure 10 shows the position of the objective 106 of the microscope relative to the sample carrier 1002. The position of the optical axis O of the objective 106 is denoted in Figure 10 by a black dot 1004. The Objective 106 is placed under a well 108 of the sample carrier 1002 located in the top left corner. The position of the opening 110 of the microscope stage 704 is denoted in Figure 10 by a dashed rectangle 1006. As can be seen in Figure 10, there is a large gap between objective 106 and the inner edge of the opening 110 of the microscope stage 704. Thus, even when viewing samples located in wells 108 near the inner edge of the opening 110 of the microscope stage 704, there is no risk of the objective 106 colliding with the microscope stage 704.

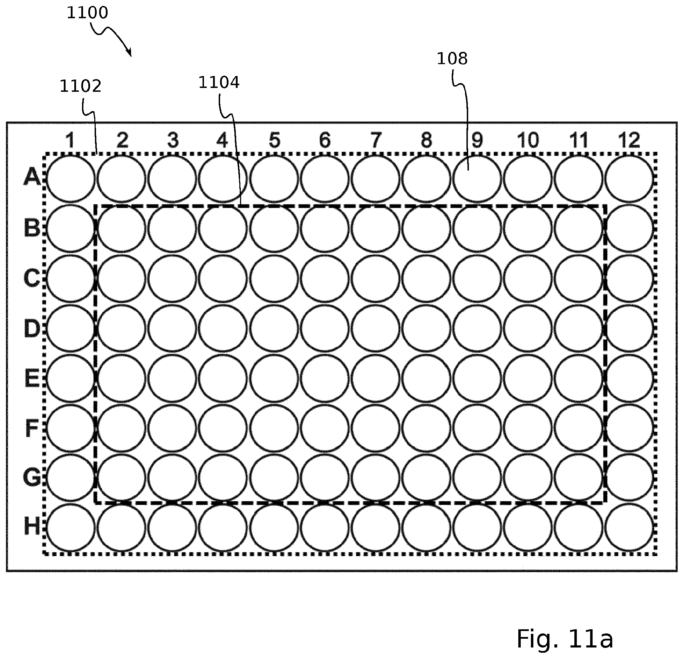

Figure 11a is a schematic top view of a sample carrier 1100 comprising 96 wells 108. A dotted rectangle 1102 in Figure 11a denotes the area accessible to the objective 106 when a sample carrier interface according to any of the embodiments described above is used to mount the sample carrier 1100 on the microscope stage 704. A dashed rectangle 1104 in Figure 11a denotes the area accessible to the objective 106 when a stage insert according to the state of the art is used to mount the sample carrier 1100 on the microscope stage 704. As can be seen in Figure 11a, when a known stage insert is used out, of the 96 wells 108 only 80 are accessible.

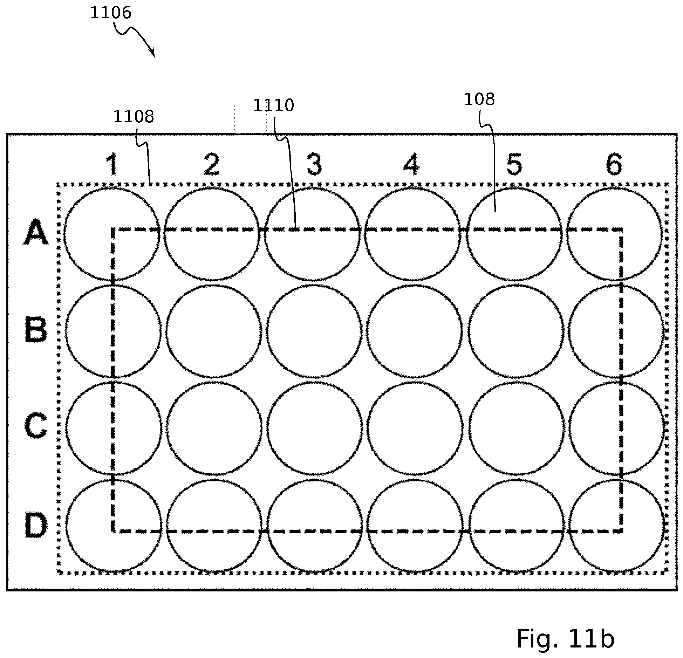

Figure 11b is a schematic top view of a sample carrier 1106 comprising 24 wells 108.

A dotted rectangle 1108 in Figure 11b denotes the area accessible to the objective 106 when a sample carrier interface according to any of the embodiments described above is used to mount the sample carrier 1106 on the microscope stage 704. A dashed rectangle 1110 in Figure 11b denotes the area accessible to the objective 106 when a stage insert according to the state of the art is used to mount the sample carrier 1106 on the microscope stage 704. As can be seen in Figure 11a, when a known stage insert is used out, of the 24 wells 108 only 8 are completely accessible, while for the remaining 16 wells 108 are only half of the area of the well 108 is accessible.

When viewed together, Figures 11a and 11b show that using a known stage insert limits the capacity of microwell plates to between around 60% to 80% of the total capacity. The remaining capacity remains inaccessible to observation.

Although all embodiments show the sample carrier interface used in conjunction with an inverse microscope, the use of the sample carrier interface is not limited to inverse microscopes. The sample carrier interface can also be used for example in an upright microscope.

Identical or similarly acting elements are designated with the same reference signs in all Figures. As used herein the term "and/or" includes any and all combinations of one or more of the associated listed items and may be abbreviated as "/". Individual features of the embodiments and all combinations of individual features of the embodiments among each other as well as in combination with individual features or feature groups of the preceding description and/or claims are considered disclosed.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of Reference Signs

- 100: sample carrier interface
- 102: sample carrier
- 104: microscope stage
- 106: objective
- 108: well
- 110: opening
- 112: frame
- 114: cavity
- 116: opening
- 118: spacer element
- 120a, 120b: fixing element
- 122: locking device
- 124: engaging portion
- 200: sample carrier interface
- 202: slider
- 300: inside wall
- 600: arrangement
- 602, 604: rod
- 606, 608: joint
- 610: guiding element
- 700: sample carrier
- 702: sample carrier interface
- 704: microscope stage
- 706: surface
- 708: objective
- 800: sample carrier interface
- 802: incubation chamber
- 804: lid
- 806: sealing portion
- 808: gas inlet
- 1000: sample carrier interface
- 1002: sample carrier
- 1004: dot
- 1006: rectangle
- 1100: sample carrier
- 1102, 1104: rectangle
- 1106: sample carrier
- 1108, 1110: rectangle
- H: line
- O: optical axis

## Claims

1. A sample carrier interface (100, 200, 702, 800, 1000) for mounting a sample carrier (102, 700, 1002, 1100, 1106) on a microscope stage (104, 704), the sample carrier interface (100, 200, 702, 800, 1000) comprising
a frame (112) configured to receive the sample carrier (102, 700, 1002, 1100, 1106) and to be positioned atop an opening (110) of the microscope stage (104, 704); and
a locking device (122) configured to exert a lateral force to the sample carrier (102, 700, 1002, 1100, 1106) when the locking device (122) is in a locked state in order to keep the sample carrier (102, 700, 1002, 1100, 1106) suspended above the opening (110) when the sample carrier (102, 700, 1002, 1100, 1106) is received in the frame (112) and the frame (112) is positioned atop the opening (110) of the microscope stage (104, 704),
wherein the locking device (122) comprises an adjusting element (202)
**characterised in that** the adjusting element (202) is for switching between the locked state, and an unlocked state in which the locking device (122) does not exert the lateral force to the sample carrier (102, 700, 1002, 1100, 1106).

2. The sample carrier interface (100, 200, 702, 800, 1000) according to claim 1, wherein the locking device (122) is configured to hold the sample carrier (102, 700, 1002, 1100, 1106) in place when the sample carrier interface (100, 200, 702, 800, 1000) is moved to and from the microscope stage (104, 704), and when the locking device (122) is in the locked state.

3. The sample carrier interface (100, 200, 702, 800, 1000) according to claim 1 or 2, the frame (112) comprises an opening (116) at a bottom side and is configured to receive the sample carrier (102, 700, 1002, 1100, 1106) through said opening (116).

4. The sample carrier interface (100, 200, 702, 800, 1000) according to any one of the preceding claims, wherein a or the bottom side of the frame (112) defines a contact surface that contacts a top surface of the microscope stage (104, 704) when the frame (112) is positioned atop the opening (110) of the microscope stage (104, 704).

5. The sample carrier interface (100, 200, 702, 800, 1000) according to claim 4, wherein the contact surface of the frame (112) is at the same height as a bottom side of the sample carrier (102, 700, 1002, 1100, 1106) when the sample carrier (102, 700, 1002, 1100, 1106) is received in the frame (112) and the frame (112) is positioned atop the opening (110) of the microscope stage (104, 704).

6. The sample carrier interface (100, 200, 702, 800, 1000) according to any one of the preceding claims, wherein the sample carrier (102, 700, 1002, 1100, 1106) is completely received inside the frame (112).

7. The sample carrier interface (100, 200, 702, 800, 1000) according to any one of the preceding claims, wherein the locking device (122) comprises at least one moveable engaging portion (124) configured to engage with the sample carrier (102, 700, 1002, 1100, 1106) and thereby exert the lateral force to the sample carrier (102, 700, 1002, 1100, 1106) when the locking device (122) is in the locked state.

8. The sample carrier interface (100, 200, 702, 800, 1000) according to any one of the preceding claims, wherein the locking device (122) comprises a wire that wraps around the sample carrier (102, 700, 1002, 1100, 1106) when the sample carrier (102, 700, 1002, 1100, 1106) is received in the frame (112); and wherein the wire can be tightened in order to exert the lateral force to the sample carrier (102, 700, 1002, 1100, 1106).

9. The sample carrier interface (100, 200, 702, 800, 1000) according to any one of the preceding claims, wherein the sample carrier interface (100, 200, 702, 800, 1000) comprises at least one fixing element configured to engage with a corresponding fixing element of the microscope stage (104, 704).

10. The sample carrier interface (100, 200, 702, 800, 1000) according to any one of the preceding claims, wherein the sample carrier interface (100, 200, 702, 800, 1000) comprises at least one guiding portion configured to engage with the microscope stage (104, 704) for positioning the sample carrier interface (100, 200, 702, 800, 1000) atop the microscope stage (104, 704).

11. The sample carrier interface (800) according to any one of the preceding claims, wherein the frame (112) is configured to form part of an incubation chamber (802) when the sample carrier (102) is received in the frame (112), in particular a gas tight incubation chamber (802).

12. The sample carrier interface (100) according to claim 11, wherein the locking device (122) comprises a sealing portion (806) configured to provide a gas tight seal to the incubation chamber (802) when the sample carrier (102) is received in the frame (112) and the locking device (122) is in the locked state.

13. The sample carrier interface (800) according to claim 11 or 12, wherein the frame (112) comprises a gas inlet (808) for providing an incubation atmosphere, a semi-sterile, and/or a sterile atmosphere to the incubation chamber (802).

14. The sample carrier interface (100, 200, 702, 800, 1000) according to any one of the preceding claims, wherein the sample carrier (102, 700, 1002, 1100, 1106) is a microwell plate or a slide holder.

15. A method for adapting a sample carrier (102, 700, 1002, 1100, 1106) to a microscope stage (104, 704), comprising the following steps:
a) providing a sample carrier interface (100, 200, 702, 800, 1000) according to any of the claims 1 to 14;
b) inserting the sample carrier (102, 700, 1002, 1100, 1106) into the frame (112) of the sample carrier interface (100, 200, 702, 800, 1000);
c) locking the sample carrier (102, 700, 1002, 1100, 1106) to the frame (112) by exerting the lateral force to the sample carrier (102, 700, 1002, 1100, 1106);
d) placing the sample carrier interface (100, 200, 702, 800, 1000) atop the opening (110) of the microscope stage (104, 704) in order to suspend the sample carrier (102, 700, 1002, 1100, 1106) above the opening (110).

16. The method according to claim 15 comprising the following additional steps: placing the sample carrier (102, 700, 1002, 1100, 1106) on a flat surface or a dedicated mounting plate; and lowering the sample carrier interface (100, 200, 702, 800, 1000) onto the sample carrier (102, 700, 1002, 1100, 1106) from above.

## Patentansprüche

1. Probenträgerschnittstelle (100, 200, 702, 800, 1000) zum Befestigen eines Probenträgers (102, 700, 1002, 1100, 1106) auf einem Mikroskoptisch (104, 704), wobei die Probenträgerschnittstelle (100, 200, 702, 800, 1000) Folgendes umfasst
einen Rahmen (112), der so konfiguriert ist, dass er den Probenträger (102, 700, 1002, 1100, 1106) aufnimmt und auf einer Öffnung (110) des Mikroskoptisches (104, 704) positioniert werden kann; und
eine Verriegelungsvorrichtung (122), die so konfiguriert ist, dass sie eine seitliche Kraft auf den Probenträger (102, 700, 1002, 1100, 1106) ausübt, wenn sich die Verriegelungsvorrichtung (122) in einem verriegelten Zustand befindet, um den Probenträger (102, 700, 1002, 1100, 1106) über der Öffnung (110) aufgehängt zu halten, wenn der Probenträger (102, 700, 1002, 1100, 1106) in dem Rahmen (112) aufgenommen ist und der Rahmen (112) über der Öffnung (110) des Mikroskoptisches (104, 704) positioniert ist,
wobei die Verriegelungsvorrichtung (122) ein Einstellelement (202) umfasst, **dadurch gekennzeichnet, dass** das Einstellelement (202) zum Umschalten zwischen dem verriegelten Zustand und einem entriegelten Zustand, in dem die Verriegelungsvorrichtung (122) keine seitliche Kraft auf den Probenträger (102, 700, 1002, 1100, 1106) ausübt, dient.

2. Probenträgerschnittstelle (100, 200, 702, 800, 1000) nach Anspruch 1, wobei die Verriegelungsvorrichtung (122) so konfiguriert ist, dass sie den Probenträger (102, 700, 1002, 1100, 1106) an Ort und Stelle hält, wenn die Probenträgerschnittstelle (100, 200, 702, 800, 1000) zu dem und von dem Mikroskoptisch (104, 704) bewegt wird und wenn die Verriegelungsvorrichtung (122) sich in dem verriegelten Zustand befindet.

3. Probenträgerschnittstelle (100, 200, 702, 800, 1000) nach Anspruch 1 oder 2, wobei der Rahmen (112) an einer Unterseite eine Öffnung (116) umfasst und zur Aufnahme des Probenträgers (102, 700, 1002, 1100, 1106) durch die Öffnung (116) konfiguriert ist.

4. Probenträgerschnittstelle (100, 200, 702, 800, 1000) nach einem der vorstehenden Ansprüche, wobei eine oder die Unterseite des Rahmens (112) eine Kontaktfläche definiert, die eine obere Fläche des Mikroskoptisches (104, 704) kontaktiert, wenn der Rahmen (112) oben auf der Öffnung (110) des Mikroskoptisches (104, 704) positioniert ist.

5. Probenträgerschnittstelle (100, 200, 702, 800, 1000) nach Anspruch 4, wobei die Kontaktfläche des Rahmens (112) auf der gleichen Höhe wie eine Unterseite des Probenträgers (102, 700, 1002, 1100, 1106) ist, wenn der Probenträger (102, 700, 1002, 1100, 1106) in dem Rahmen (112) aufgenommen ist und der Rahmen (112) oben auf der Öffnung (110) des Mikroskoptisches (104, 704) positioniert ist.

6. Probenträgerschnittstelle (100, 200, 702, 800, 1000) nach einem der vorstehenden Ansprüche, wobei der Probenträger (102, 700, 1002, 1100, 1106) vollständig im Inneren des Rahmens (112) aufgenommen ist.

7. Probenträgerschnittstelle (100, 200, 702, 800, 1000) nach einem der vorstehenden Ansprüche, wobei die Verriegelungsvorrichtung (122) mindestens einen beweglichen Eingriffsabschnitt (124) umfasst, der so konfiguriert ist, dass er mit dem Probenträger (102, 700, 1002, 1100, 1106) in Eingriff kommt und wodurch die seitliche Kraft auf den Probenträger (102, 700, 1002, 1100, 1106) ausgeübt wird, wenn sich die Verriegelungsvorrichtung (122) in dem verriegelten Zustand befindet.

8. Probenträgerschnittstelle (100, 200, 702, 800, 1000) nach einem der vorstehenden Ansprüche, wobei die Verriegelungsvorrichtung (122) einen Draht umfasst, der sich um den Probenträger (102, 700, 1002, 1100, 1106) wickelt, wenn der Probenträger (102, 700, 1002, 1100, 1106) in dem Rahmen (112) aufgenommen ist; und wobei der Draht gestrafft werden kann, um die seitliche Kraft auf den Probenträger (102, 700, 1002, 1100, 1106) auszuüben.

9. Probenträgerschnittstelle (100, 200, 702, 800, 1000) nach einem der vorstehenden Ansprüche, wobei die Probenträgerschnittstelle (100, 200, 702, 800, 1000) mindestens ein Befestigungselement umfasst, das so konfiguriert ist, dass es mit einem entsprechenden Befestigungselement des Mikroskoptisches (104, 704) in Eingriff kommt.

10. Probenträgerschnittstelle (100, 200, 702, 800, 1000) nach einem der vorstehenden Ansprüche, wobei die Probenträgerschnittstelle (100, 200, 702, 800, 1000) mindestens einen Führungsabschnitt umfasst, der so konfiguriert ist, dass er zum Positionieren der Probenträgerschnittstelle (100, 200, 702, 800, 1000) auf dem Mikroskoptisch (104, 704) mit dem Mikroskoptisch (104, 704) in Eingriff kommt.

11. Probenträgerschnittstelle (800) nach einem der vorstehenden Ansprüche, wobei der Rahmen (112) so konfiguriert ist, dass er einen Teil einer Inkubationskammer (802) bildet, wenn der Probenträger (102) in dem Rahmen (112) aufgenommen ist, insbesondere eine gasdichte Inkubationskammer (802).

12. Probenträgerschnittstelle (100) nach Anspruch 11, wobei die Verriegelungsvorrichtung (122) einen Dichtungsabschnitt (806) umfasst, der so konfiguriert ist, dass er eine gasdichte Abdichtung zu der Inkubationskammer (802) bereitstellt, wenn der Probenträger (102) in dem Rahmen (112) aufgenommen ist und die Verriegelungsvorrichtung (122) sich in dem verriegelten Zustand befindet.

13. Probenträgerschnittstelle (800) nach Anspruch 11 oder 12, wobei der Rahmen (112) einen Gaseinlass (808) zur Bereitstellung einer Inkubationsatmosphäre, einer halbsterilen und/oder einer sterilen Atmosphäre für die Inkubationskammer (802) umfasst.

14. Probenträgerschnittstelle (100, 200, 702, 800, 1000) nach einem der vorstehenden Ansprüche, wobei der Probenträger (102, 700, 1002, 1100, 1106) eine Mikrotiterplatte oder ein Objektträgerhalter ist.

15. Verfahren zum Anpassen eines Probenträgers (102, 700, 1002, 1100, 1106) an einen Mikroskoptisch (104, 704), umfassend die folgenden Schritte:
a) Bereitstellen einer Probenträgerschnittstelle (100, 200, 702, 800, 1000) nach einem der Ansprüche 1 bis 14;
b) Einsetzen des Probenträgers (102, 700, 1002, 1100, 1106) in den Rahmen (112) der Probenträgerschnittstelle (100, 200, 702, 800, 1000);
c) Verriegeln des Probenträgers (102, 700, 1002, 1100, 1106) an dem Rahmen (112) durch Ausüben der seitlichen Kraft auf den Probenträger (102, 700, 1002, 1100, 1106);
d) Platzieren der Probenträgerschnittstelle (100, 200, 702, 800, 1000) über der Öffnung (110) des Mikroskoptisches (104, 704), um den Probenträger (102, 700, 1002, 1100, 1106) über der Öffnung (110) aufzuhängen.

16. Verfahren nach Anspruch 15, umfassend die folgenden zusätzlichen Schritte: Platzieren des Probenträgers (102, 700, 1002, 1100, 1106) auf einer ebenen Fläche oder einer speziellen Montageplatte; und Absenken der Probenträgerschnittstelle (100, 200, 702, 800, 1000) auf den Probenträger (102, 700, 1002, 1100, 1106) von oben.

## Revendications

1. Interface (100, 200, 702, 800, 1000) de support d'échantillon pour monter un support (102, 700, 1002, 1100, 1106) d'échantillon sur une platine (104, 704) de microscope, l'interface (100, 200, 702, 800, 1000) de support d'échantillon comprenant
un cadre (112) configuré pour recevoir le support (102, 700, 1002, 1100, 1106) d'échantillon et pour être positionné au-dessus d'une ouverture (110) de la platine (104, 704) de microscope ; et
un dispositif (122) de verrouillage configuré pour exercer une force latérale sur le support (102, 700, 1002, 1100, 1106) d'échantillon lorsque le dispositif (122) de verrouillage est dans un état verrouillé afin de maintenir le support (102, 700, 1002, 1100, 1106) d'échantillon suspendu au-dessus de l'ouverture (110) lorsque le support (102, 700, 1002, 1100, 1106) d'échantillon est reçu dans le cadre (112) et le cadre (112) est positionné au-dessus de l'ouverture (110) de la platine (104, 704) de microscope,
dans laquelle le dispositif (122) de verrouillage comprend un élément de réglage (202) **caractérisé en ce que** l'élément de réglage (202) est destiné à commuter entre l'état verrouillé et un état déverrouillé dans lequel le dispositif (122) de verrouillage n'exerce pas la force latérale sur le support (102, 700, 1002, 1100, 1106) d'échantillon.

2. Interface (100, 200, 702, 800, 1000) de support d'échantillon selon la revendication 1, dans laquelle le dispositif (122) de verrouillage est configuré pour maintenir le support (102, 700, 1002, 1100, 1106) d'échantillon en place lorsque l'interface (100, 200, 702, 800, 1000) de support d'échantillon est déplacée vers et depuis la platine (104, 704) de microscope, et lorsque le dispositif (122) de verrouillage est à l'état verrouillé.

3. Interface (100, 200, 702, 800, 1000) de support d'échantillon selon la revendication 1 ou la revendication 2, dans laquelle le cadre (112) comprend une ouverture (116) sur un côté inférieur et est configuré pour recevoir le support (102, 700, 1002, 1100, 1106) d'échantillon à travers ladite ouverture (116).

4. Interface (100, 200, 702, 800, 1000) de support d'échantillon selon l'une quelconque des revendications précédentes, dans laquelle un ou le côté inférieur du cadre (112) définit une surface de contact qui entre en contact avec une surface supérieure de la platine (104, 704) de microscope lorsque le cadre (112) est positionné au-dessus de l'ouverture (110) de la platine (104, 704) de microscope.

5. Interface (100, 200, 702, 800, 1000) de support d'échantillon selon la revendication 4, dans laquelle la surface de contact du cadre (112) est à la même hauteur qu'un côté inférieur du support (102, 700, 1002, 1100, 1106) d'échantillon lorsque le support (102, 700, 1002, 1100, 1106) d'échantillon est reçu dans le cadre (112) et le cadre (112) est positionné au-dessus de l'ouverture (110) de la platine (104, 704) de microscope.

6. Interface (100, 200, 702, 800, 1000) de support d'échantillon selon l'une quelconque des revendications précédentes, dans laquelle le support (102, 700, 1002, 1100, 1106) d'échantillon est complètement reçu à l'intérieur du cadre (112).

7. Interface (100, 200, 702, 800, 1000) de support d'échantillon selon l'une quelconque des revendications précédentes, dans laquelle le dispositif (122) de verrouillage comprend au moins une partie de mise en prise mobile (124) configurée pour se mettre en prise avec le support (102, 700, 1002, 1100, 1106) d'échantillon et exercer ainsi la force latérale sur le support (102, 700, 1002, 1100, 1106) d'échantillon lorsque le dispositif (122) de verrouillage est à l'état verrouillé.

8. Interface (100, 200, 702, 800, 1000) de support d'échantillon selon l'une quelconque des revendications précédentes, dans laquelle le dispositif (122) de verrouillage comprend un fil qui s'enroule autour du support (102, 700, 1002, 1100, 1106) d'échantillon lorsque le support (102, 700, 1002, 1100, 1106) d'échantillon est reçu dans le cadre (112) ; et dans laquelle le fil peut être serré afin d'exercer la force latérale sur le support (102, 700, 1002, 1100, 1106) d'échantillon.

9. Interface (100, 200, 702, 800, 1000) de support d'échantillon selon l'une quelconque des revendications précédentes, dans laquelle l'interface (100, 200, 702, 800, 1000) de support d'échantillon comprend au moins un élément de fixation configuré pour venir en prise avec un élément de fixation correspondant de la platine (104, 704) de microscope.

10. Interface (100, 200, 702, 800, 1000) de support d'échantillon selon l'une quelconque des revendications précédentes, dans laquelle l'interface (100, 200, 702, 800, 1000) de support d'échantillon comprend au moins une partie de guidage configurée pour venir en prise avec la platine (104, 704) de microscope afin de positionner l'interface (100, 200, 702, 800, 1000) de support d'échantillon sur la platine (104, 704) de microscope.

11. Interface (800) de support d'échantillon selon l'une quelconque des revendications précédentes, dans laquelle le cadre (112) est configuré pour faire partie d'une chambre (802) d'incubation lorsque le support (102) d'échantillon est reçu dans le cadre (112), en particulier une chambre (802) d'incubation étanche au gaz.

12. Interface (100) de support d'échantillon selon la revendication 11, dans laquelle le dispositif (122) de verrouillage comprend une partie d'étanchéité (806) configurée pour fournir une étanchéité au gaz à la chambre (802) d'incubation lorsque le support (102) d'échantillon est reçu dans le cadre (112) et que le dispositif (122) de verrouillage est à l'état verrouillé.

13. Interface (800) de support d'échantillon selon la revendication 11 ou la revendication 12, dans laquelle le cadre (112) comprend une entrée (808) de gaz pour fournir une atmosphère d'incubation, une atmosphère semi-stérile et/ou une atmosphère stérile à la chambre (802) d'incubation.

14. Interface (100, 200, 702, 800, 1000) de support d'échantillon selon l'une quelconque des revendications précédentes, dans laquelle le support (102, 700, 1002, 1100, 1106) d'échantillon est une plaque de micropuits ou un porte-lames.

15. Procédé d'adaptation d'un support (102, 700, 1002, 1100, 1106) d'échantillon à une platine (104, 704) de microscope, comprenant les étapes suivantes :
a) la fourniture d'une interface (100, 200, 702, 800, 1000) de support d'échantillon selon l'une quelconque des revendications 1 à 14 ;
b) l'insertion du support (102, 700, 1002, 1100, 1106) d'échantillon dans le cadre (112) de l'interface (100, 200, 702, 800, 1000) de support d'échantillon ;
c) le verrouillage du support (102, 700, 1002, 1100, 1106) d'échantillon au cadre (112) en exerçant la force latérale sur le support (102, 700, 1002, 1100, 1106) d'échantillon ;
d) le placement de l'interface (100, 200, 702, 800, 1000) de support d'échantillon au-dessus de l'ouverture (110) de la platine (104, 704) de microscope afin de suspendre le support (102, 700, 1002, 1100, 1106) d'échantillon au-dessus de l'ouverture (110).

16. Procédé selon la revendication 15 comprenant les étapes supplémentaires suivantes : le placement du support (102, 700, 1002, 1100, 1106) d'échantillon sur une surface plane ou une plaque de montage dédiée ; et l'abaissement de l'interface (100, 200, 702, 800, 1000) de support d'échantillon sur le support (102, 700, 1002, 1100, 1106) d'échantillon par le haut.
